(19) Europäisches Patentamt
European Patent Office
Office européen des brevets

(11) **EP 4 685 665 A1**

(12) **EUROPEAN PATENT APPLICATION**
published in accordance with Art. 153(4) EPC

(43) Date of publication:
28.01.2026 Bulletin 2026/05

(51) International Patent Classification (IPC):
*G06F 16/332* (2025.01)   *G06F 40/35* (2020.01)

(21) Application number: 24844307.9

(22) Date of filing: 28.04.2024

(86) International application number:
PCT/CN2024/090401

(87) International publication number:
WO 2025/020611 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.07.2023 CN 202310913820

(71) Applicant: Jingdong Technology Holding Co., Ltd.
Beijing 100176 (CN)

(72) Inventors:
• WANG, Qiulin
  Beijing 100176 (CN)
• ZHANG, Liping
  Beijing 100176 (CN)
• CAO, Junhao
  Beijing 100176 (CN)
• SHAN, Xinyuan
  Beijing 100176 (CN)

(74) Representative: Böckmann genannt Dallmeyer,
Georg Nikolas
Haldenstrasse 49b
8142 Uitikon Waldegg (Zürich) (CH)

(54) **SESSION RESPONSE METHOD AND APPARATUS, ELECTRONIC DEVICE AND STORAGE MEDIUM**

(57) Provided are a session response method and apparatus, an electronic device and a storage medium. The method comprises: acquiring multi-modal session information arranged according to a session time sequence, wherein the multi-modal session information includes first modal information and second modal information (S110); performing multi-modal semantic representation on at least two modal features in the first modal information to obtain a first representation vector (S120); performing semantic representation of a corresponding modality on the second modal information to obtain a second representation vector (S130); inputting the first representation vector, the second representation vector and the corresponding session time sequence into a session matching model, respectively, to obtain a matching result (S140); and responding to the multi-modal session information according to the matching result (S150).

FIG. 1

**Description**

CROSS-REFERENCE TO RELATED APPLICATIONS

The present application claims priority to Chinese Patent Application No. 202310913820.9, which was filed on July 24, 2023 and entitled "SESSION RESPONSE METHOD AND APPARATUS, ELECTRONIC DEVICE AND STORAGE MEDIUM", the content of which is hereby incorporated by reference in its entirety.

TECHNICAL FIELD

The present disclosure relates to the field of information processing technology, and, in particular, to a session response method and apparatus, an electronic device and a storage medium.

BACKGROUND

Intelligent customer service is a technology based on natural language processing, and, in recent years, has been widely used on major Internet platforms. The relevant technology is mainly based on natural language processing technology, i.e., understanding and answering the text content input by the user. However, with the diversification of user needs, user input has become multi-modal, and single text understanding cannot fully understand the user context and intention, resulting in low response accuracy and poor user experience.

It should be noted that the information disclosed in the above Background is only used to enhance the understanding of the background of the present disclosure, and therefore may include information that does not constitute the prior art known to those skilled in the art.

SUMMARY

According to a first aspect of the present disclosure, a session response method is provided, comprising: acquiring multi-modal session information arranged according to a session time sequence, wherein the multi-modal session information includes first modal information and second modal information; performing multi-modal semantic representation on at least two modal features in the first modal information to obtain a first representation vector; performing semantic representation of a corresponding modality on the second modal information to obtain a second representation vector; inputting the first representation vector, the second representation vector and the corresponding session time sequence into a session matching model, respectively, to obtain a matching result; and responding to the multi-modal session information according to the matching result.

Optionally, performing multi-modal semantic representation on at least two modal features in the first modal information comprises: extracting text content and text position information from the first modal information; dividing the first modal information into patchs to obtain patch information and patch position coordinates; performing vectorization representation on the text content, the text position information, the patch information and the patch position coordinates, respectively; and performing multi-modal semantic representation on a vectorization representation result by a multi-modal semantic representation model to obtain a first representation vector.

Optionally, performing vectorization representation on the text content, the text position information, the patch information and the patch position coordinates, respectively, comprises: performing embedded mapping on the text content, the text position information and the patch position coordinates, respectively; and performing linear mapping on the patch information.

Optionally, the multi-modal semantic representation model includes a first encoding model, a second encoding model and a feature fusion model, and performing multi-modal semantic representation on a vectorization representation result comprises: performing, by the first encoding model, encoding processing on a vector representation result of the patch information and a vector representation result of the patch position coordinates, respectively, to obtain a first encoding vector; performing, by the second encoding model, encoding processing on vector representation of the text content and vector representation of the text position information, respectively, to obtain a second encoding vector; and performing, by the feature fusion model, feature fusion on a concatenated vector of the first encoding vector and the second encoding vector to obtain the first representation vector, wherein the first encoding model and the second encoding model are obtained based on a pre-training process of contrastive learning.

Optionally, the method further comprises: acquiring a business corpus of a target business, the business corpus including at least two first modal corpora; taking an image feature and a text feature of one of the first modal corpora as positive examples, and taking an image feature of one of the first modal corpora and a text feature of another of the first modal corpora as negative examples, to construct a first training sample; and performing, using the first training sample, contrastive learning training on the first encoding model and the second encoding model to obtain a pre-trained multi-modal encoding model.

Optionally, performing, using the first training sample, contrastive learning training on the first encoding model and the second encoding model comprises: inputting image features corresponding to the positive examples and negative examples in the first training sample into the first encoding model, and outputting an image representation vector; inputting text features corresponding to the positive examples and negative examples in the first training sample into the second encoding model, and outputting a text representation vector; calculating a contrastive loss based on the image representation vector and the text representation vector; and training the first encoding model and the second encoding model, according to the contrastive loss, to obtain a pre-trained multi-modal encoding model.

Optionally, performing semantic representation of a corresponding modality on the second modal information comprises: performing semantic encoding on the second modal information by a semantic encoding model to obtain the second representation vector, wherein the semantic encoding model is obtained by training a pre-trained third encoding model.

Optionally, the method further comprises: taking various multi-modal session corpora in the business corpus as a second training sample; retrieving a label of the second training sample in a search knowledge base, wherein the search knowledge base, which is constructed based on the business corpus, includes a domain dimension, an intention dimension within the domain, and a question-answer pair dimension under the intention, and the label includes labels under various dimensions; and training, using the second training sample and the corresponding label, the pre-trained first encoding model, second encoding model and third encoding model, the feature fusion model, and the session matching model, respectively.

Optionally, the session matching model comprises a context representation model and a plurality of prediction heads, one prediction head corresponding to one dimension in the search knowledge base, and to obtain a matching result comprises: performing, by the context representation model, feature encoding based on a multi-head attention mechanism on the first representation vector, the second representation vector and the corresponding session time sequence to obtain a third representation vector; and inputting the third representation vector into each of the prediction heads to obtain a matching result corresponding to each dimension.

Optionally, to obtain a matching result corresponding to each dimension comprises: performing, using each of the prediction heads, full connection processing and nonlinear activation processing on the third representation vector to obtain a prediction probability score corresponding to each prediction head; and determining a prediction result with a top n prediction probability score in each prediction head as the matching result, where n is a positive integer.

Optionally, the method further comprises: performing keyword matching on the text content and the second modal information, respectively, in a domain keyword library; and performing keyword matching on the text content and the second modal information, respectively, in an intention keyword library, wherein the domain keyword library and the intention keyword library are respectively constructed based on knowledge information of the corresponding dimensions of the search knowledge base.

Responding to the multi-modal session information according to the matching result comprises: rearranging, according to the matching result of each prediction head and the keyword matching results, matching results of the prediction head corresponding to the question-answer pair dimension to obtain a rearrangement score; and using a question-answer pair with the rearrangement score greater than a preset threshold as the response content for a session response.

According to a second aspect of the present disclosure, a session response apparatus is provided, comprising: an acquisition module, a first representation module, a second representation module, a session matching module, and a response module, wherein: the acquisition module is configured to acquire multi-modal session information arranged according to a session time sequence, wherein the multi-modal session information includes first modal information and second modal information; the first representation module is configured to perform multi-modal semantic representation on at least two modal features in the first modal information to obtain a first representation vector; the second representation module is configured to perform semantic representation of a corresponding modality on the second modal information to obtain a second representation vector; the session matching module is configured to input the first representation vector, the second representation vector and the corresponding session time sequence into a session matching model, respectively, to obtain a matching result; and the response module is configured to respond to the multi-modal session information according to the matching result.

According to a third aspect of the present disclosure, there is provided a computer-readable storage medium having a computer program stored thereon that, when executed by a processor, implements the method of any one of the above embodiments.

According to a fourth aspect of the present disclosure, there is provided an electronic device, comprising: one or more processors; and a storage device for storing one or more programs that, when executed by the one or more processors, cause the one or more processors to implement the method of any one of the above embodiments.

It should be understood that the foregoing general description and the following detailed description are exemplary and explanatory only, and cannot restrict the present disclosure.

BRIEF DESCRIPTION OF THE DRAWINGS

The figures herein, which are incorporated into the Description and constitute a part of this Description, illustrate embodiments consistent with the present disclosure and, together with the Description, serve to explain the principles of the present disclosure. Obviously, the figures described below are only some embodiments of the present disclosure, and those skilled in the art can also obtain other figures based on these figures without any inventive work.

FIG. 1 schematically shows a flowchart of a session response method according to an embodiment of the present disclosure.
FIG. 2 schematically shows a flowchart of a multi-modal representation process of first modal information according to an embodiment of the present disclosure.
FIG. 3 schematically shows a flowchart of a contrastive learning training process according to an embodiment of the present disclosure.
FIG. 4 schematically shows a schematic diagram of a cascade search knowledge base according to an embodiment of the present disclosure.
FIG. 5 schematically shows a flowchart of a keyword matching process of a keyword library according to an embodiment of the present disclosure.
FIG. 6 schematically shows a processing flowchart of a session response process according to an embodiment of the present disclosure.
FIG. 7 schematically shows a structural patch diagram of a session response apparatus according to an embodiment of the present disclosure.
FIG. 8 shows a patch diagram of an electronic device suitable for implementing the embodiments of the present disclosure.

DETAILED DESCRIPTION

Now, exemplary embodiments will be described more fully with reference to the figures. However, the exemplary embodiments may be implemented in many forms and should not be construed as limited to the examples set forth herein; rather, these embodiments are provided so that the present disclosure will be more comprehensive and complete and will fully convey the concept of the exemplary embodiments to those skilled in the art. The described features, structures or characteristics may be combined in any suitable manner into one or more embodiments. In the following description, numerous specific details are provided so as to give a thorough understanding of the embodiments of the present disclosure. However, those skilled in the art will recognize that the technical solutions of the present disclosure may be practiced while omitting one or more of the specific details, or other methods, components, devices, steps, etc. may be adopted. In other cases, well-known technical solutions are not shown or described in detail to avoid overshadowing the main ones and obscuring the various aspects of the present disclosure.

Furthermore, the figures are merely schematic illustrations of the present disclosure and are not necessarily drawn to scale. The same reference signs in the figures denote the same or similar parts, and thus their repeated description will be omitted. Some of the patch diagrams shown in the figures are functional entities, which do not necessarily have to correspond to physically or logically separate entities. These functional entities may be implemented in the form of software, or in one or more hardware modules or integrated circuits, or in different networks and/or processor devices and/or micro-controller devices.

An embodiment of the present invention provides an exemplary system diagram of an application scene for a session response method and apparatus, wherein the system includes a terminal and a server. The method of the present embodiment can be applied to a server. It is understandable that the method can also be applied to a terminal or a system including the terminal and the server and implemented through interaction between the terminal and the server. The server may be an independent physical server, or a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDN (Content Delivery Network), as well as big data and artificial intelligence platforms, or a node in the blockchain.

For example, in the customer service process, the user enters multi-modal session information on the client. The server can, based on the multi-modal session information, perform multi-modal semantic representation on at least two modal features in the first modal information therein to obtain a first representation vector; perform semantic representation of a corresponding modality on the second modal information therein to obtain a second representation vector; input the first representation vector, the second representation vector and the corresponding session time sequence into a session matching model, respectively, to obtain a matching result; and determine response content according to the matching result, and send the response content to a user terminal.

The terminal may be a smart phone, a tablet computer, a laptop computer, a desktop computer, a smart speaker, a smart watch, a vehicle-mounted device, etc., but is not limited thereto. When the session response method provided in the present embodiment is implemented through the interaction between the terminal and the server, the terminal and the server can be connected directly or indirectly via wired or wireless communication, which is not limited in the present disclosure.

The session response method provided in the embodiment of the present disclosure can be executed on a server, and, accordingly, the session response apparatus is generally disposed in the server.

Hereinafter, the session response method disclosed in the embodiments of the present Description is introduced in conjunction with specific embodiments.

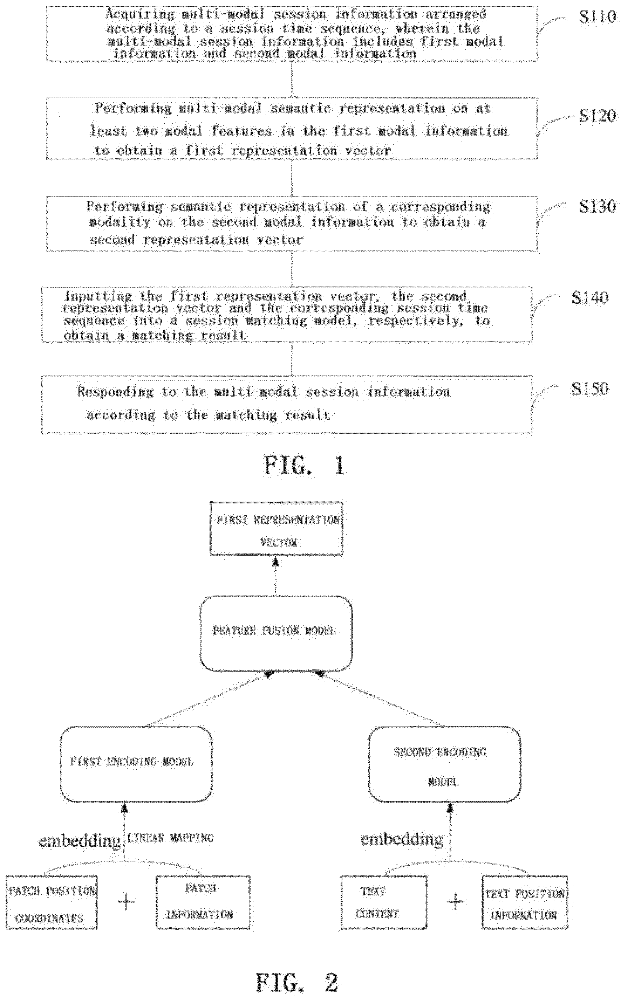

As shown in FIG. 1, a session response method according to an exemplary embodiment provided by the present disclosure can be applied to various intelligent customer service systems and may include the following steps:

Step S110: acquiring multi-modal session information arranged according to a session time sequence, wherein the multi-modal session information includes first modal information and second modal information.

Step S120: performing multi-modal semantic representation on at least two modal features in the first modal information to obtain a first representation vector.

Step S130: performing semantic representation of a corresponding modality on the second modal information to obtain a second representation vector.

Step S140: inputting the first representation vector, the second representation vector and the corresponding session time sequence into a session matching model, respectively, to obtain a matching result.

Step S150: responding to the multi-modal session information according to the matching result.

In the session response method provided by the present exemplary embodiment, on the one hand, semantic representation can be performed on the first modal information and the second modal information in the multi-modal session information, respectively, a representation result and a corresponding session time sequence can be input into a session matching model to obtain a matching result, a session response can be performed based on the matching result, multiple modal information and the session time sequence in the multi-modal session information can be fused for the response, and the understanding of the user's previous context can be improved, thereby improving the accuracy of the response. On the other hand, by performing multi-modal semantic representation on at least two modal features in the first modal information, it is possible to mine multiple modal features in the first modal information, comprehensively and deeply understand the semantics in the first modal information, and improve the depth and comprehensiveness of the semantic understanding of the first modal information, thereby improving the accuracy of the response.

In Step S110, multi-modal session information arranged according to a session time sequence is acquired.

In the present exemplary embodiment, the multi-modal session information refers to session information including at least two modal information; exemplarily, the session information may be information with a time sequence formed by an interactive dialogue between the user and the customer service, and the session time sequence refers to a time sequence in the session. A modality is a source or form of information; the multi-modal session information may include at least two of image information, audio information, and text information. For example, the multi-modal session information includes first modal information and second modal information, wherein the first modal information is image information, and the second modal information is text information or audio information. The first modal information and the second modal information are information corresponding to different modalities.

In Step S120, multi-modal semantic representation is performed on at least two modal features in the first modal information to obtain a first representation vector.

In the present exemplary embodiment, the modal feature refers to at least one of a text feature, an image feature, and an audio feature. Different modal features can be extracted from the first modal information in various information extraction manners. Semantic representation can be performed on the extracted multi-modal features by a multi-modal semantic representation model, the multi-modal semantic representation model may include multiple parallel semantic representation modules and modal fusion modules, one modality can correspond to one semantic representation module, the semantic representation module is used to perform semantic representation of the corresponding modality, and the modal fusion module is used to fuse multiple representation results.

Exemplarily, as shown in FIG. 2, the multi-modal semantic representation model includes a first encoding model, a second encoding model and a feature fusion model, and the multi-modal semantic representation can be performed by the following steps:

A first step: extracting text content and text position information from the first modal information.

In the present exemplary embodiment, an optical character recognition model can be used to extract the text content and the text position information from the first modal information, i.e., the first modal features. The present embodiment can use OCR (Optical Character Recognition) to extract text content and text box coordinates from the image information.

A second step: dividing the first modal information into patchs to obtain patch information and patch position coordinates.

In the present exemplary embodiment, the patch refers to a patch of the image, the patch information refers to an obtained image patch, and the patch position coordinates refer to position coordinates of each image patch in the image. The present embodiment can extract the image patch and its position coordinates, i.e., the first modal features.

A third step: performing vectorization representation on the text content, the text position information, the patch information and the patch position coordinates, respectively.

In the present exemplary embodiment, the text content can be segmented and converted into a word vector, such as embedding words, embedded mapping can also be performed on the text position information and the patch position coordinates by embedding, and the text position vector is superimposed with the word vector to form vector representation of the first modal feature. The patch information (image patch) can be mapped into a low-dimensional vector by linear transformation, and the patch vector is superimposed with the patch position vector to form vector representation of the second modal feature. The patch vector has the same dimension as the word vector.

A fourth step: performing, by the first encoding model, encoding processing on a vector representation result of the patch information and a vector representation result of the patch position coordinates, respectively, to obtain a first encoding vector.

In the present exemplary embodiment, the first encoding model is used to perform feature encoding on the image patch and its position information in the first modal information, and the first encoding model may be a transformer architecture that uses a multi-head attention mechanism to encode the image patch. For example, the input of the first encoding model is a corresponding CLS token (classification feature/used for global feature aggregation) and image patch token (including the patch position coordinate embedding), the model's ability to recognize the overall page layout is enhanced by adding patch position coordinates, and the output of the CLS token is used as unimodal representation of the first modal information.

A fifth step: performing, by the second encoding model, encoding processing on vector representation of the text content and vector representation of the text position information, respectively, to obtain a second encoding vector.

In the present exemplary embodiment, the second encoding model is used to perform feature encoding on the text content and its position information in the first modal information, and the second encoding model may be a transformer architecture that uses a multi-head attention mechanism to encode the OCR text. For example, the input of the second encoding model is a corresponding CLS token and OCR text token (including the text position information embedding), the model's ability to recognize the text structure and overall page layout is enhanced by adding text position information, and the output of the CLS token is used as unimodal representation of the second modal information.

A sixth step: performing, by the feature fusion model, feature fusion on a concatenated vector of the first encoding vector and the second encoding vector to obtain the first representation vector.

In the present exemplary embodiment, the first encoding vector and the second encoding vector can be vector-concatenated and then input into a feature fusion model for feature dimension fusion. The feature fusion model may be a multi-layer perceptron, by which linear transformation and nonlinear processing are performed on the concatenated vector to complete deep feature fusion and output the first representation vector of image and text fusion.

The multi-modal semantic representation model in the above embodiments is trained, wherein the first encoding model and the second encoding model are obtained by fine-tuning parameters via overall model training based on a pre-training process of contrastive learning, and the feature fusion model is obtained via overall model training.

Exemplarily, the contrastive learning pre-training process for the first encoding model and the second encoding model may include the following steps:

Acquire a business corpus of a target business, the business corpus including at least two first modal corpora.

In the present exemplary embodiment, the target business may be customer service business or other business in a customer service scene (such as pre-sales business or after-sales business, financial business, etc.), and the business corpus, which is a corpus knowledge base for the target business, may include interactive corpora between the user and the customer service in various customer service scenes. The corpora may include a large amount of information such as text, images, and audio. The first modal corpus may be an image corpus, and one image can serve as one first modal corpus.

Take an image feature and a text feature of one of the first modal corpora as positive examples, and take an image feature of one of the first modal corpora and a text feature of another of the first modal corpora as negative examples, to construct a first training sample.

In the present exemplary embodiment, the image feature and the text feature of the same image can be taken as positive examples, and the image feature of one image and the text feature of another image can be taken as negative examples, that is, the text feature and the image feature of the negative examples come from different images, to construct a first training sample.

Perform, using the first training sample, contrastive learning training on the first encoding model and the second encoding model to obtain a pre-trained multi-modal encoding model.

In the present exemplary embodiment, by the contrastive learning training of the first encoding model and the second encoding model, common features between the positive examples are learned, and differences between the negative examples are distinguished. The two encoding models subjected to contrastive learning encode the same type of data similarly, and make the encoding results of different types of data as different as possible. The contrastive learning does not need to focus on the tedious details of the instance, but only needs to learn to distinguish the data in the feature space at the abstract semantic level, so that the model and its optimization are simpler and have stronger generalization ability.

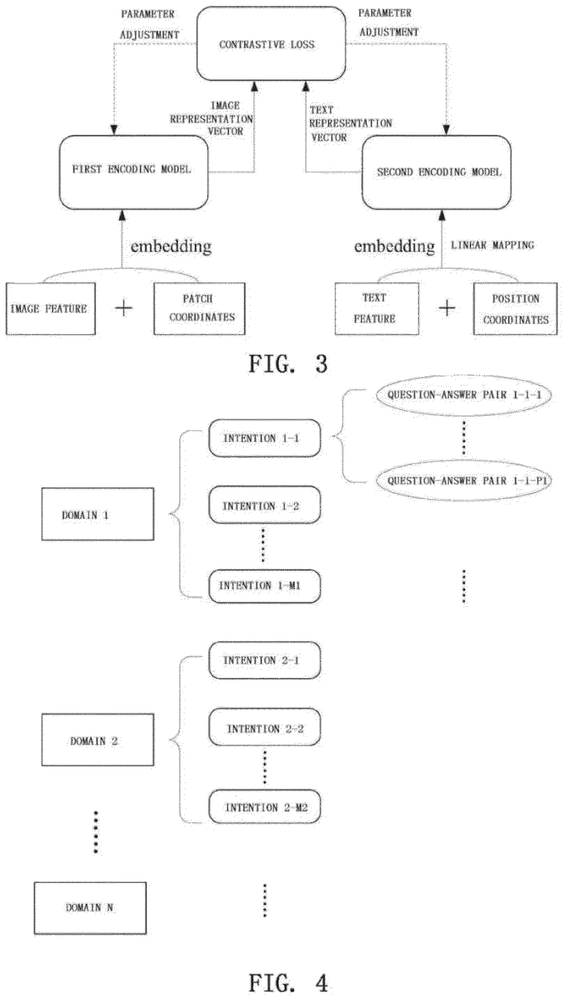

Exemplarily, referring to FIG. 3, the contrastive learning training can be performed by the following steps:

inputting image features corresponding to the positive examples and negative examples in the first training sample into the first encoding model, and outputting an image representation vector; inputting text features corresponding to the positive examples and negative examples in the first training sample into the second encoding model, and outputting a text representation vector; calculating a contrastive loss based on the image representation vector and the text representation vector; and

training the first encoding model and the second encoding model, according to the contrastive loss, to obtain a pre-trained multi-modal encoding model.

In the present exemplary embodiment, the first encoding model is used for image representation, and the second encoding model is used for text representation. An InfoNCE loss can be used for training. Specifically, the contrastive loss can be expressed as:

$$L_{InfoNCE} = L_{v2l} + L_{l2v}$$

where $L_{v2l}$ corresponds to a contrastive learning loss for a given image:

$$L_{v2l} = -\sum_i \log \frac{\exp(f_i^{v^T} \cdot f_i^l/\tau)}{\exp(f_i^{v^T} \cdot f_i^l/\tau) + \sum_{j \neq i} \exp(f_i^{v^T} \cdot f_j^l/\tau)} \text{, and}$$

$L_{l2v}$ corresponds to a contrastive learning loss for a given text:

$$L_{l2v} = -\sum_i \log \frac{\exp(f_i^{v^T} \cdot f_i^l/\tau)}{\exp(f_i^{v^T} \cdot f_i^l/\tau) + \sum_{j \neq i} \exp(f_j^{v^T} \cdot f_i^l/\tau)}$$

where $f_*^v$ is an image representation vector, $f_*^l$ is a text representation vector, * may be i or j, i and j represent image numbers, respectively, $\tau$ is a temperature hyperparameter (e.g., set to 0.05), and the superscript T indicates a transpose operation.

In the present embodiment, by unsupervised contrastive learning pre-training with a large number of positive and negative samples, the first encoding model and the second encoding model can learn information of two dimensions: first, the overall page layout of the image and the layout information of the OCR text box, which are helpful for domain judgment; second, the semantic information of the OCR text, wherein, with the help of semantics, the domain can be judged from another dimension, and intention judgment can also be performed on part of the image based on semantics.

Based on the above pre-training of the first encoding model and the second encoding model, the entire model can also be trained as a whole. The entire model may include a multi-modal semantic representation model, a pre-trained third encoding model and a session matching model, and the overall training process may include the following steps.

Construct a search knowledge base based on the business corpus. Take various multi-modal session corpora in the business corpus as a second training sample; retrieve a label of the second training sample in the search knowledge base; and train, using the second training sample and the corresponding label, the pre-trained first encoding model and second encoding model, the pre-trained third encoding model, the feature fusion model, and the session matching model, respectively.

In the present exemplary embodiment, since the present method can be understood as a search-based response manner, in order to cover all the questions and needs of users as much as possible, it is necessary to form a search knowledge base based on each domain, user intentions, and possible FAQs (Frequently Asked Questions) and answers in the customer service scene so that it can cover all customer service business scenes. As shown in FIG. 4, the search knowledge base may include a domain dimension (domain 1, domain 2 ... domain N), an intention dimension within the domain (such as intention 1-2 ... intention 1-m1 within domain 1) and a question-answer pair dimension under the intention (such as question-answer pairs 1-1-1 ... 1-1-p1 under intention 1-1), wherein N is the number of domains, m1 is the number of intentions within domain 1, and p1 is the number of question-answer pairs under intention 1-1. "..." in FIG. 4 indicates that a specific example is omitted here. The construction process of the search knowledge base may be as follows: first, the customer service scene can be divided into multiple domains based on dimensions such as the user entry, user source, product, and function, and the division principles are to ensure that there is no overlap between the domains and to cover all customer service scenes as much as possible; second, in each domain, the intentions of user questions are enumerated, which, for example, can be roughly divided according to the types of the user questions, which also ensures that there is no overlap between the intentions and covers all user questions within the domain as much as possible; finally, under a given domain and intention, a large number of FAQs and their corresponding answers are summarized to cover all questions raised by users as much as possible, and to finally form a cascade search knowledge base of domain-intention-FAQ answer pairs. For example, the FAQ "How to make a repayment" can correspond to the FAQ under the repayment manner question intention in the financial domain in the search knowledge base. The cascade search knowledge base can improve the matching accuracy.

In the present exemplary embodiment, a session corpus may be used as a training sample, and one training sample may include multiple text sentences and image information. Based on this multidimensional search knowledge base, sample labels also include labels under various dimensions, that is, one dimension corresponds to one label, and each sample can have a domain label, an intention label, and a question-answer pair label. The samples can be input into models to fine-tune parameters of the pre-trained models (first encoding model, second encoding model and third encoding model) and to train the untrained models (feature fusion model and session matching model), wherein the image information in the samples is input into the multi-modal semantic representation model, and the text information in the samples is input into the third encoding model. A loss function is calculated by the output and label of the prediction head corresponding to each dimension, and the models are trained by minimizing the loss function. The loss function here may be a cross entropy loss function. After the model training is completed, it can be used for an online session response.

In Step S130, semantic representation of a corresponding modality is performed on the second modal information to obtain a second representation vector.

In the present exemplary embodiment, semantic encoding can be performed on the second modal information by a semantic encoding model to obtain a second representation vector. The semantic encoding model is obtained by training the pre-trained third encoding model, that is, after the above-mentioned model is trained as a whole. The third encoding model may be a Bert model or other text semantic representation models, which are not limited in the present embodiment.

In Step S140, the first representation vector, the second representation vector and the corresponding session time sequence are input into a session matching model, respectively, to obtain a matching result.

In the present exemplary embodiment, the session matching model may comprise a context representation model and a plurality of prediction heads, wherein one prediction head corresponds to one dimension in the search knowledge base, that is, one dimension has one prediction head, for predicting the dimension information of the session. The context representation model may be a context semantic understanding model, such as a transformer model. The prediction head may be various classifiers, and may be a fully connected network here.

Exemplarily, perform, by the context representation model, feature encoding based on a multi-head attention mechanism on the first representation vector, the second representation vector and the corresponding session time sequence to obtain a third representation vector; and input the third representation vector into each of the prediction heads to obtain a matching result corresponding to each dimension.

In the present exemplary embodiment, the transformer model (context representation model) can be used to perform feature encoding based on a multi-head attention mechanism on the first representation vector, the second representation vector and the corresponding session time sequence (i.e., position encoding). The transformer model may include an encoder and a decoder, wherein the encoder adopts the structures of a self-attention mechanism and a feedforward neural network, and the decoder adopts the same structures as the encoder, the difference of which is that the decoder also has an attention structure between the two structures to make the decoder focus on relevant parts of the input features. The representation results output by the transformer model are input into three prediction heads (i.e., the domain prediction head, intention prediction head and question-answer pair prediction head), respectively, for matching prediction in each dimension, and each prediction head outputs a corresponding matching result.

In some embodiments, full connection processing and nonlinear activation processing can be performed on the third representation vector, using each of the prediction heads, to obtain a prediction probability score corresponding to each prediction head.

In the present exemplary embodiment, each prediction head may be a fully connected layer, by which the representation result is fully connected and then mapped to a probability of each category through a softmax activation function. Each domain or intention or question-answer pair can correspond to a category, and the domain, intention, question and corresponding answer involved in the session can be predicted. Exemplarily, the prediction result with a top n (n is a positive integer) prediction probability score in each prediction head can be selected as a corresponding matching result. The n corresponding to different prediction heads may be the same or different, which is not limited in the present embodiment. For example, the domain with the highest probability score can be determined as a domain matching result, the intention with a top 5 probability score can be determined as an intention matching result, and the question and the corresponding answer with a top 20 probability score can be determined as a question-answer pair matching result.

In Step S150, the multi-modal session information is responded to according to the matching result.

In the present exemplary embodiment, the matching result can be used as response content to respond to the multi-modal session information, or part of the content can be selected from the matching result to respond thereto, which is not limited in the present embodiment.

In some embodiments, a keyword library can also be constructed to perform answer prediction together with the matching result. A keyword library for the domain and intention can be constructed on the basis of the search knowledge base, i.e., constructing a corresponding keyword library based on knowledge information of the domain dimension and intention dimension of the search knowledge base, for performing field matching with text in the user question text or image and assisting in the domain and intention prediction. Since the information content of keywords is relatively limited, only coarse-grained judgment such as the domain or intention can be made, which can be fused with the matching result of the above-mentioned multi-modal model to improve the accuracy of the response.

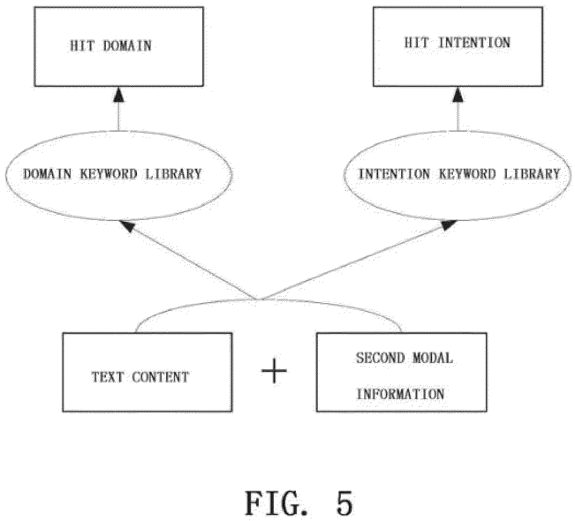

On this basis, referring to FIG. 5, keyword matching can be performed on the text content and the second modal information, respectively, in a domain keyword library; keyword matching can be performed on the text content and the second modal information, respectively, in an intention keyword library. If the text content and the second modal information appear in the domain keyword library or the intention keyword library, it is considered a hit, and the hit domain and intention are output.

In some embodiments, based on keyword matching, the matching results output by the model can be rearranged to improve the accuracy of the response, which may specifically include the following steps: rearranging, according to the matching result of each prediction head and the keyword matching results, matching results of the prediction head corresponding to the question-answer pair dimension to obtain a rearrangement score; and using a question-answer pair with the rearrangement score greater than a preset threshold as the response content for a session response.

In the present exemplary embodiment, each matched question-answer pair can be weighted according to the matching result of each prediction head and the keyword matching results to obtain a weighted rearrangement score, and the question-answer pair with the rearrangement score greater than a preset threshold can be used as the response content. The preset threshold can be set according to actual conditions.

Exemplarily, for each matched FAQ output by the model, the rearrangement score is calculated as follows: FAQ rearrangement score = model predicted FAQ score + k1*model predicted score for the corresponding domain of the FAQ + k2*model predicted score for the corresponding intention of the FAQ + k3*(flag_keyword), wherein k1, k2 and k3 represent weight coefficients corresponding to the three parts, respectively, flag_keyword, which is a Boolean variable, indicates whether the keywords are successfully matched, and if so, its value is 1, otherwise it is 0.

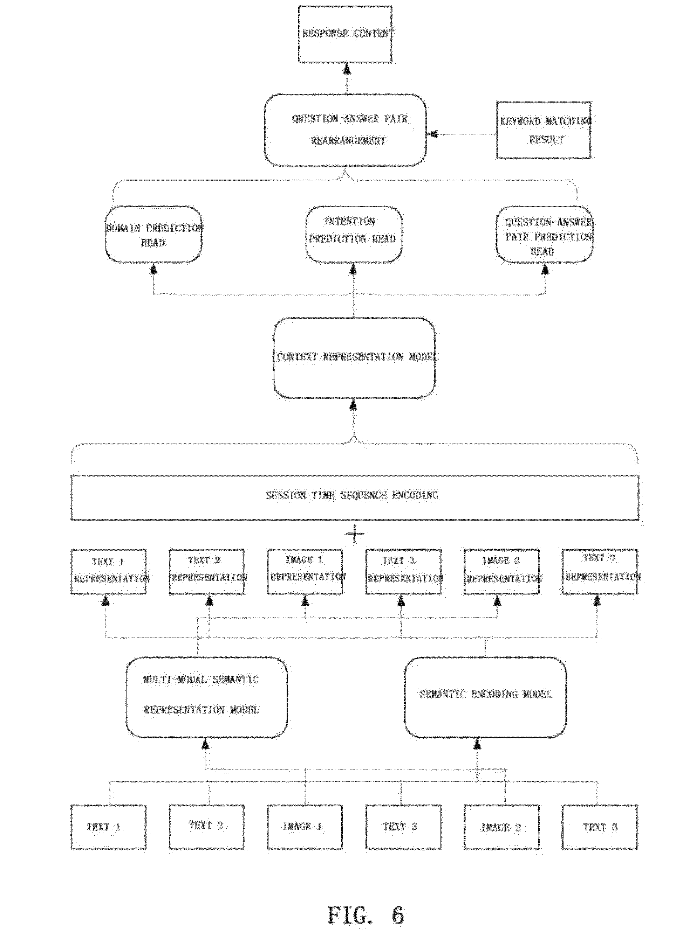

For example, the session response method of the present disclosure, of which the implementation process is shown in FIG. 6, can be implemented based on a session response model that may include a multi-modal representation model, a semantic encoding model, a context representation model, and multiple prediction heads (domain prediction head, intention prediction head, and question-answer pair prediction head), and can be specifically implemented by the following steps:

A first step: acquiring a business corpus, and constructing a search knowledge base and a keyword library (domain keyword library and intention keyword library).

A second step: constructing a training sample based on the business corpus and the search knowledge base, and training the session response model using the training sample, which mainly includes pre-training (contrastive training) of the first encoding model and the second encoding model in the multi-modal representation model and training of the entire session response model.

A third step: inputting, by the user, question-related content, which may include texts (such as text 1, text 2 and text 3) and images (image 1 and image 2), and acquiring, by the session response system, multi-modal session information arranged according to a session time sequence.

A fourth step: performing, by the multi-modal representation model, fusion representation on multiple modalities in the first modal information (such as image 1 and image 2) in the multi-modal session information to obtain a first representation vector (image 1 representation and image 2 representation).

A fifth step: performing, by the semantic encoding model, semantic representation on the second modal information (such as text 1, text 2 and text 3) in the multi-modal session information to obtain a second representation vector (text 1 representation, text 2 representation, and text 3 representation). A sixth step: performing, by the context representation model, feature encoding based on a multi-head attention mechanism on the first representation vector, the second representation vector and the corresponding session time sequence (session time sequence encoding) to obtain a third representation vector.

A seventh step: inputting the third representation vector into the domain prediction head, the intention prediction head and the question-answer pair prediction head, respectively, to obtain a predicted domain, a predicted intention and a predicted question-answer pair.

An eighth step: performing keyword matching on the text content in the first modal information and the second modal information, respectively, in a domain keyword library; performing keyword matching on the text content in the first modal information and the second modal information, respectively, in an intention keyword library.

A ninth step: rearranging, according to the matching result of each prediction head and the keyword matching results, matching results of the prediction head corresponding to the question-answer pair dimension to obtain a rearrangement score.

A tenth step: using a question-answer pair with the rearrangement score greater than a preset threshold as the response content for a session response.

During the session response process in the above embodiments, the training of the entire model is mainly for models that have not been pre-trained, such as the feature fusion model, the context representation model and the plurality of prediction heads, and other pre-trained models are only subjected to parameter fine-tuning.

The existing intelligent customer service technology, which is mainly based on natural language processing technology, can understand text-based user input (such as input text or input voice converted into text) better and output corresponding answers. However, with the development of intelligent customer service technology and the diversification of user needs, in most current intelligent customer service scenes, users can input images more conveniently, supplemented by text, to describe problems and needs more accurately. In other words, the user input modality has changed from a single text modality to multimodal information of text/audio and images, which brings a huge challenge to the intelligent customer service technology based on natural language processing. When encountering image information, related technologies are often unable to understand and judge it correctly. Moreover, ignoring images in the session will result in an inability to correctly and completely understand the user's previous context and intention, and will easily lead to answers that do not meet the current context and user needs, resulting in reduced response accuracy and user experience.

In response to the problems faced by the user's multi-modal input (text + image), the present disclosure designs a search-based intelligent customer service response method based on a image-text multi-modal model, which fuses multiple modal information in the image information by a multi-modal representation model, and also fuses position coordinate information of the image and text, thereby enhancing the model's ability to recognize the text structure and the overall page layout. In combination with the semantic encoding model and the context representation model, it can simultaneously process text and image modality information input by the user, accurately understand the context and user intention by a plurality of prediction heads, i.e., the intention/domain to which the user's current question belongs, and filter out answers that meet the current context and user needs within this intention/domain, thereby improving the response accuracy and user experience significantly and responding to diversified intelligent customer service scenes better.

By constructing a cascade search knowledge base, the present disclosure can understand and match the session semantics layer by layer from coarse to fine, and improve the accuracy of model prediction. Based on the model prediction in combination with keyword library matching, the present disclosure increases the accuracy of the response result to the question-answer pair granularity.

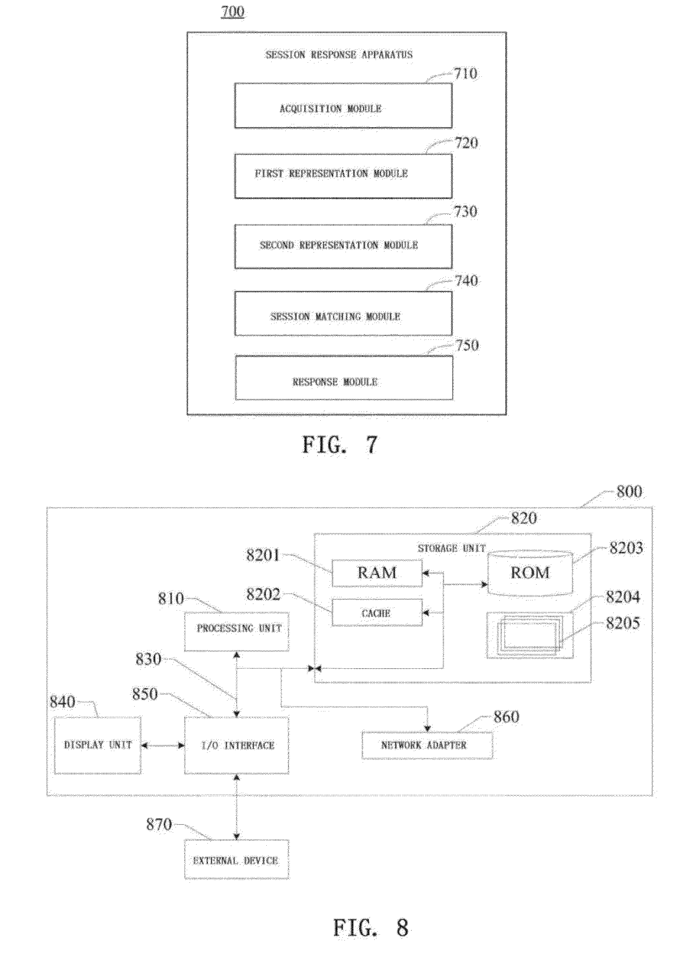

Further, in the present exemplary embodiment, a session response apparatus 700 is also provided. The session response apparatus 700 can be applied to a server. As shown in FIG. 7, the session response apparatus 700 may comprise: an acquisition module 710, a first representation module 720, a second representation module 730, a session matching module 740, and a response module 750, wherein: the acquisition module 710 is configured to acquire multi-modal session information arranged according to a session time sequence, wherein the multi-modal session information includes first modal information and second modal information; the first representation module 720 is configured to perform multi-modal semantic representation on at least two modal features in the first modal information to obtain a first representation vector; the second representation module 730 is configured to perform semantic representation of a corresponding modality on the second modal information to obtain a second representation vector; the session matching module 740 is configured to input the first representation vector, the second representation vector and the corresponding session time sequence into a session matching model, respectively, to obtain a matching result; and the response module 750 is configured to respond to the multi-modal session information according to the matching result.

In an exemplary embodiment of the present disclosure, the first representation module 720 comprises: an extraction submodule configured to extract text content and text position information in the first modal information; a patch submodule configured to divide the first modal information into patches to obtain patch information and patch position coordinates; a vectorization submodule configured to perform vectorization representation on the text content, the text position information, the patch information, and the patch position coordinates, respectively; and a semantic representation submodule configured to perform multi-modal semantic representation on the vectorization representation result by a multi-modal semantic representation model to obtain a first representation vector.

In an exemplary embodiment of the present disclosure, the vectorization submodule is also configured to: perform embedded mapping on the text content, the text position information and the patch position coordinates, respectively; and perform linear mapping on the patch information.

In an exemplary embodiment of the present disclosure, the multi-modal semantic representation model includes a first encoding model, a second encoding model and a feature fusion model, and the semantic representation submodule is also configured to: perform, by the first encoding model, encoding processing on a vector representation result of the patch information and a vector representation result of the patch position coordinates, respectively, to obtain a first encoding vector; perform, by the second encoding model, encoding processing on vector representation of the text content and vector representation of the text position information, respectively, to obtain a second encoding vector; and perform, by the feature fusion model, feature fusion on a concatenated vector of the first encoding vector and the second encoding vector to obtain the first representation vector, wherein the first encoding model and the second encoding model are obtained based on a pre-training process of contrastive learning.

In an exemplary embodiment of the present disclosure, the apparatus 700 further comprises a first training module, which is configured to: acquire a business corpus of a target business, the business corpus including at least two first modal corpora; take an image feature and a text feature of one of the first modal corpora as positive examples, and take an image feature of one of the first modal corpora and a text feature of another of the first modal corpora as negative examples, to construct a first training sample; and perform, using the first training sample, contrastive learning training on the first encoding model and the second encoding model to obtain a pre-trained multi-modal encoding model.

In an exemplary embodiment of the present disclosure, the first training module is also configured to: input image features corresponding to the positive examples and negative examples in the first training sample into the first encoding model, and output an image representation vector; input text features corresponding to the positive examples and negative examples in the first training sample into the second encoding model, and output a text representation vector; calculate a contrastive loss based on the image representation vector and the text representation vector; and train the first encoding model and the second encoding model, according to the contrastive loss, to obtain a pre-trained multi-modal encoding model.

In an exemplary embodiment of the present disclosure, the second representation module 730 is also configured to: perform semantic encoding on the second modal information by a semantic encoding model to obtain a second representation vector, wherein the semantic encoding model is obtained by training a pre-trained third encoding model.

In an exemplary embodiment of the present disclosure, the apparatus 700 further comprises a second training module, which is configured to: take various multi-modal session corpora in the business corpus as a second training sample; retrieve a label of the second training sample in a search knowledge base, wherein the search knowledge base, which is constructed based on the business corpus, includes a domain dimension, an intention dimension within the domain, and a question-answer pair dimension under the intention, and the label includes labels under various dimensions; and train, using the second training sample and the corresponding label, the pre-trained first encoding model, second encoding model and third encoding model, the feature fusion model, and the session matching model, respectively.

In an exemplary embodiment of the present disclosure, the session matching model comprises a context representation model and a plurality of prediction heads, one prediction head corresponding to one dimension in the search knowledge base, and the session matching module 740 is also configured to: perform, by the context representation model, feature encoding based on a multi-head attention mechanism on the first representation vector, the second representation vector and the corresponding session time sequence to obtain a third representation vector; and input the third representation vector into each of the prediction heads to obtain a matching result corresponding to each dimension.

In an exemplary embodiment of the present disclosure, the session matching module 740 is also configured to: perform, using each of the prediction heads, full connection processing and nonlinear activation processing on the third representation vector to obtain a prediction probability score corresponding to each prediction head; and determine a prediction result with a top n prediction probability score in each prediction head as the matching result, where n is a positive integer.

In an exemplary embodiment of the present disclosure, the apparatus 700 further comprises a keyword matching module, which is configured to: perform keyword matching on the text content and the second modal information, respectively, in a domain keyword library; and perform keyword matching on the text content and the second modal information, respectively, in an intention keyword library, wherein the domain keyword library and the intention keyword library are respectively constructed based on knowledge information of the corresponding dimensions of the search knowledge base. The response module 750 is also configured to: rearrange, according to the matching result of each prediction head and the keyword matching results, matching results of the prediction head corresponding to the question-answer pair dimension to obtain a rearrangement score; and use a question-answer pair with the rearrangement score greater than a preset threshold as the response content for a session response.

The specific details of various modules or units in the above-mentioned session response apparatus have been described in detail in the corresponding session response method, so they are no longer repeated here.

As another aspect, the present disclosure also provides a computer-readable medium, which may be included in the electronic device described in the above embodiments, or may exist alone without being assembled into the electronic device. The above computer-readable medium carries one or more programs that, when executed by the electronic device, cause the electronic device to implement the method in the following embodiments. For example, the electronic device can implement the various steps shown in FIGs. 1 to 3 and FIGs. 5 to 6.

It should be noted that the computer-readable medium shown in the present disclosure may be a computer-readable signal medium or a computer-readable storage medium or any combination of the two. The computer-readable storage medium may be, for example--but not limited to--an electrical, magnetic, optical, electromagnetic, infrared, or semiconductor system, apparatus or device, or any combination of the foregoing. More specific examples of the computer-readable storage medium may include, but are not limited to, an electrical connection having one or more conductors, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium that contains or stores a program, which can be used by or in conjunction with an instruction execution system, apparatus or device. Moreover, in the present disclosure, the computer-readable signal medium may include a data signal propagated in a baseband or as part of a carrier wave, in which a computer-readable program code is carried. Such a propagated data signal may take a variety of forms, including but not limited to an electromagnetic signal, an optical signal, or any suitable combination of the foregoing. The computer-readable signal medium, which may also be any computer-readable medium other than the computer-readable storage medium, can send, propagate or transport a program for use by or in conjunction with an instruction execution system, apparatus or device. The program code contained on the computer-readable medium may be transmitted by any appropriate medium, including but not limited to: wireless, a wire, an optical cable, an RF and the like, or any suitable combination of the foregoing.

An electronic device 800 according to such an embodiment of the present disclosure is described below with reference to FIG. 8. The electronic device 800 shown in FIG. 8, which is merely an example, should not bring any limitations to the functions and use scopes of the embodiments of the present disclosure.

As shown in FIG. 8, the electronic device 800 is in the form of a general-purpose computing device. The components of the electronic device 800 may include, but are not limited to: the at least one processing unit 810 mentioned above, the at least one storage unit 820 mentioned above, a bus 830 connecting different system components (including the storage unit 820 and the processing unit 810), and a display unit 840.

The storage unit stores a program code, which can be executed by the processing unit 810, so that the processing unit 810 executes the steps according to various exemplary embodiments of the present disclosure as described in the above "exemplary method" of the present Description.

The storage unit 820 may include a readable medium in the form of a volatile storage unit, such as a random access memory unit (RAM) 8201 and/or a cache memory unit 8202, and may also further include a read-only memory unit (ROM) 8203.

The storage unit 820 may also include a program/utility 8204 having a set of (at least one) program modules 8205, and such program modules 8205 include, but are not limited to: an operating system, one or more application programs, other program modules, and program data, each or some combination of which may include the implementation of a network environment.

The bus 830 may represent one or more of several types of bus structures, including a memory unit bus or memory unit controller, a peripheral bus, an accelerated graphics port, a processing unit, or a local bus using any of a variety of bus structures.

The electronic device 800 can also communicate with one or more external devices 870 (e.g., keyboards, pointing devices, Bluetooth devices, etc.), with one or more devices that enable the user to interact with the electronic device 800, and/or with any devices (e.g., routers, modems, etc.) that enable the electronic device 800 to communicate with one or more other computing devices. Such communications may occur via an input/output (I/O) interface 850. In addition, the electronic device 800 can also communicate with one or more networks (e.g., a local area network (LAN), a wide area network (WAN), and/or a public network, such as the Internet) via a network adapter 860. As shown in the figure, the network adapter 860 communicates with other modules of the electronic device 800 via the bus 830. It should be understood that, although not shown in the figure, other hardware and/or software modules can be used in conjunction with the electronic device 800, including but not limited to: microcode, device drivers, redundant processing units, external disk drive arrays, RA identification systems, tape drives, and data backup storage systems.

Through the description of the above embodiments, those skilled in the art can easily understand that the exemplary embodiments described here can be implemented by software, or by software in combination with necessary hardware. Therefore, the technical solutions according to the embodiments of the present disclosure can be embodied in the form of a software product, which can be stored in a non-volatile storage medium (which may be a CD-ROM, a USB flash drive, a mobile hard disk, or the like) or on a network, and includes a number of instructions to enable a computing device (which may be a personal computer, a server, a terminal device, a network device, or the like) to execute the method according to the embodiments of the present disclosure.

Moreover, the above figures are merely schematic illustrations of the processes included in the method according to the exemplary embodiments of the present disclosure, and are not intended for limiting purposes. It is easy to understand that the processes shown in the above figures do not indicate or limit the time sequence of these processes. In addition, it is also easy to understand that these processes can be executed synchronously or asynchronously in multiple modules, for example.

It should be noted that although the various steps of the method in the present disclosure are described in a particular order in the figures, this does not require or imply that the steps must be performed in this particular order, or that all the steps shown must be performed to achieve the desired results. Additionally or alternatively, some steps may be omitted, multiple steps may be combined into one step for execution, and/or one step may be decomposed into multiple steps for execution, etc., all of which should be considered as part of the present disclosure.

It should be understood that the present disclosure disclosed and defined in the present Description extends to all alternative combinations of two or more individual features mentioned or evident from the text and/or figures. All of these different combinations constitute various alternative aspects of the present disclosure. The embodiments of the present Description illustrate the best mode known for carrying out the present disclosure and will enable those skilled in the art to utilize the present disclosure.

**Claims**

1. A session response method, comprising:

    acquiring multi-modal session information arranged according to a session time sequence, wherein the multi-modal session information includes first modal information and second modal information; performing multi-modal semantic representation on at least two modal features in the first modal information to obtain a first representation vector;
    performing semantic representation of a corresponding modality on the second modal information to obtain a second representation vector;
    inputting the first representation vector, the second representation vector and the corresponding session time sequence into a session matching model, respectively, to obtain a matching result; and responding to the multi-modal session information according to the matching result.

2. The session response method according to claim 1, wherein performing multi-modal semantic representation on at least two modal features in the first modal information comprises:

    extracting text content and text position information from the first modal information;
    dividing the first modal information into patchs to obtain patch information and patch position coordinates;
    performing vectorization representation on the text content, the text position information, the patch information and the patch position coordinates, respectively; and
    performing multi-modal semantic representation on a vectorization representation result by a multi-modal semantic representation model to obtain the first representation vector.

3. The session response method according to claim 2, wherein performing vectorization representation on the text content, the text position information, the patch information and the patch position coordinates, respectively, comprises:

    performing embedded mapping on the text content, the text position information and the patch position coordinates, respectively; and
    performing linear mapping on the patch information.

4. The session response method according to claim 2 or 3, wherein the multi-modal semantic representation model includes a first encoding model, a second encoding model and a feature fusion model, and performing multi-modal semantic representation on a vectorization representation result comprises:

    performing, by the first encoding model, encoding processing on a vector representation result of the patch information and a vector representation result of the patch position coordinates, respectively, to obtain a first encoding vector;

performing, by the second encoding model, encoding processing on vector representation of the text content and vector representation of the text position information, respectively, to obtain a second encoding vector; and

performing, by the feature fusion model, feature fusion on a concatenated vector of the first encoding vector and the second encoding vector to obtain the first representation vector,

wherein the first encoding model and the second encoding model are obtained based on a pre-training process of contrastive learning.

5. The session response method according to claim 4, wherein the method further comprises:

acquiring a business corpus of a target business, the business corpus including at least two first modal corpora;

taking an image feature and a text feature of one of the first modal corpora as positive examples, and taking an image feature of one of the first modal corpora and a text feature of another of the first modal corpora as negative examples, to construct a first training sample; and

performing, using the first training sample, contrastive learning training on the first encoding model and the second encoding model to obtain a pre-trained multi-modal encoding model.

6. The session response method according to claim 5, wherein performing, using the first training sample, contrastive learning training on the first encoding model and the second encoding model comprises:

inputting image features corresponding to the positive examples and negative examples in the first training sample into the first encoding model, and outputting an image representation vector; inputting text features corresponding to the positive examples and negative examples in the first training sample into the second encoding model, and outputting a text representation vector;

calculating a contrastive loss based on the image representation vector and the text representation vector; and

training the first encoding model and the second encoding model, according to the contrastive loss, to obtain a pre-trained multi-modal encoding model.

7. The session response method according to claim 1, wherein performing semantic representation of a corresponding modality on the second modal information comprises:

performing semantic encoding on the second modal information by a semantic encoding model to obtain the second representation vector, wherein the semantic encoding model is obtained by training a pre-trained third encoding model.

8. The session response method according to claim 5, wherein the method further comprises:

taking various multi-modal session corpora in the business corpus as a second training sample;

retrieving a label of the second training sample in a search knowledge base, wherein the search knowledge base, which is constructed based on the business corpus, includes a domain dimension, an intention dimension within the domain, and a question-answer pair dimension under the intention, and the label includes labels under various dimensions; and

training, using the second training sample and the corresponding label, the pre-trained first encoding model, second encoding model and third encoding model, the feature fusion model, and the session matching model, respectively.

9. The session response method according to claim 8, wherein the session matching model comprises a context representation model and a plurality of prediction heads, one prediction head corresponding to one dimension in the search knowledge base, and to obtain a matching result comprises:

performing, by the context representation model, feature encoding based on a multi-head attention mechanism on the first representation vector, the second representation vector and the corresponding session time sequence to obtain a third representation vector; and

inputting the third representation vector into each of the prediction heads to obtain a matching result corresponding to each dimension.

10. The session response method according to claim 9, wherein to obtain a matching result corresponding to each dimension comprises:

performing, using each of the prediction heads, full connection processing and nonlinear activation processing on the third representation vector to obtain a prediction probability score corresponding to each prediction head; and determining a prediction result with a top n prediction probability score in each prediction head as the matching result, where n is a positive integer.

11. The session response method according to claim 9 or 10, wherein the method further comprises:

performing keyword matching on the text content and the second modal information, respectively, in a domain keyword library; and
performing keyword matching on the text content and the second modal information, respectively, in an intention keyword library,
wherein the domain keyword library and the intention keyword library are respectively constructed based on knowledge information of the corresponding dimensions of the search knowledge base; and
responding to the multi-modal session information according to the matching result comprises:

rearranging, according to the matching result of each prediction head and the keyword matching results, matching results of the prediction head corresponding to the question-answer pair dimension to obtain a rearrangement score; and
using a question-answer pair with the rearrangement score greater than a preset threshold as the response content for a session response.

12. A session response apparatus, the apparatus comprising:

an acquisition module configured to acquire multi-modal session information arranged according to a session time sequence, wherein the multi-modal session information includes first modal information and second modal information;
a first representation module configured to perform multi-modal semantic representation on at least two modal features in the first modal information to obtain a first representation vector;
a second representation module configured to perform semantic representation of a corresponding modality on the second modal information to obtain a second representation vector;
a session matching module configured to input the first representation vector, the second representation vector and the corresponding session time sequence into a session matching model, respectively, to obtain a matching result; and
a response module configured to respond to the multi-modal session information according to the matching result.

13. An electronic device, comprising:

one or more processors; and
a storage device for storing one or more programs that, when executed by the one or more processors, cause the one or more processors to implement the method according to any one of claims 1 to 11.

14. A computer-readable storage medium having a computer program stored thereon that, when executed by a processor, implements the method according to any one of claims 1 to 11.

| | |
|---|---|
| Acquiring multi-modal session information arranged according to a session time sequence, wherein the multi-modal session information includes first modal information and second modal information | S110 |
| Performing multi-modal semantic representation on at least two modal features in the first modal information to obtain a first representation vector | S120 |
| Performing semantic representation of a corresponding modality on the second modal information to obtain a second representation vector | S130 |
| Inputting the first representation vector, the second representation vector and the corresponding session time sequence into a session matching model, respectively, to obtain a matching result | S140 |
| Responding to the multi-modal session information according to the matching result | S150 |

FIG. 1

FIRST REPRESENTATION VECTOR

FEATURE FUSION MODEL

FIRST ENCODING MODEL

SECOND ENCODING MODEL

embedding LINEAR MAPPING

embedding

PATCH POSITION COORDINATES + PATCH INFORMATION

TEXT CONTENT + TEXT POSITION INFORMATION

FIG. 2

FIG. 3

FIG. 4

FIG. 5

RESPONSE CONTENT

QUESTION-ANSWER PAIR
REARRANGEMENT

KEYWORD MATCHING
RESULT

DOMAIN PREDICTION
HEAD

INTENTION
PREDICTION HEAD

QUESTION-ANSWER
PAIR PREDICTION
HEAD

CONTEXT REPRESENTATION MODEL

SESSION TIME SEQUENCE ENCODING

+

TEXT 1
REPRESENTATION

TEXT 2
REPRESENTATION

IMAGE 1
REPRESENTATION

TEXT 3
REPRESENTATION

IMAGE 2
REPRESENTATION

TEXT 3
REPRESENTATION

MULTI-MODAL SEMANTIC
REPRESENTATION MODEL

SEMANTIC ENCODING MODEL

TEXT 1

TEXT 2

IMAGE 1

TEXT 3

IMAGE 2

TEXT 3

FIG. 6

700

SESSION RESPONSE APPARATUS

ACQUISITION MODULE — 710

FIRST REPRESENTATION MODULE — 720

SECOND REPRESENTATION MODULE — 730

SESSION MATCHING MODULE — 740

RESPONSE MODULE — 750

FIG. 7

800

STORAGE UNIT — 820

8201 — RAM

ROM — 8203

8202 — CACHE

— 8204

810 — PROCESSING UNIT

— 8205

830

840 — DISPLAY UNIT

850 — I/O INTERFACE

NETWORK ADAPTER — 860

870 — EXTERNAL DEVICE

FIG. 8

## INTERNATIONAL SEARCH REPORT

| International application No. |
|---|
| **PCT/CN2024/090401** |

### A. CLASSIFICATION OF SUBJECT MATTER

G06F16/332(2019.01)i; G06F40/35(2020.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; VEN; DWPI; ENTXT; CNKI; GOOGLE: 答复, 回答, 应答, 对话, 会话, 模态, 融合, 时间, 时序, 位置, 定位, 坐标, 编码, 图, 文本, 块, 向量, 矢量, 语义, 预测头, 维度, reply, respond, answer, dialog, session, mode, merge, time, sequence, locate, position, image, text, block, vector, semantic, dimension

### C. DOCUMENTS CONSIDERED TO BE RELEVANT

| Category* | Citation of document, with indication, where appropriate, of the relevant passages | Relevant to claim No. |
|---|---|---|
| PX | CN 117056474 A (JDT HOLDINGS CO., LTD.) 14 November 2023 (2023-11-14) description, paragraphs 37-138 | 1-14 |
| Y | CN 113780009 A (BEIJING WODONG TIANJUN INFORMATION TECHNOLOGY CO., LTD. et al.) 10 December 2021 (2021-12-10) description, paragraphs 37-93 | 1, 7, 12-14 |
| Y | CN 114064870 A (JINGDONG SHUKE HAIYI INFORMATION TECHNOLOGY CO., LTD.) 18 February 2022 (2022-02-18) description, paragraphs 32-98 | 1, 7, 12-14 |
| A | CN 112527962 A (CLOUDWALK TECHNOLOGY CO., LTD.) 19 March 2021 (2021-03-19) entire document | 1-14 |
| A | CN 114399775 A (PING AN TECHNOLOGY (SHENZHEN) CO., LTD.) 26 April 2022 (2022-04-26) entire document | 1-14 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 June 2024** | **04 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 685 665 A1

| | INTERNATIONAL SEARCH REPORT | International application No. |
|---|---|---|
| | | **PCT/CN2024/090401** |

**C. DOCUMENTS CONSIDERED TO BE RELEVANT**

| Category* | Citation of document, with indication, where appropriate, of the relevant passages | Relevant to claim No. |
|---|---|---|
| A | CN 115309882 A (SHANGHAI YUANMENG INTELLIGENT TECHNOLOGY CO., LTD. et al.) 08 November 2022 (2022-11-08) entire document | 1-14 |
| A | US 2022392454 A1 (OPENSTREAM INC.) 08 December 2022 (2022-12-08) entire document | 1-14 |

Form PCT/ISA/210 (second sheet) (July 2022)

International application No.

**PCT/CN2024/090401**

| Patent document cited in search report | | | Publication date (day/month/year) | Patent family member(s) | | | Publication date (day/month/year) |
|---|---|---|---|---|---|---|---|
| CN | 117056474 | A | 14 November 2023 | None | | | |
| CN | 113780009 | A | 10 December 2021 | None | | | |
| CN | 114064870 | A | 18 February 2022 | CN | 114064870 | B | 05 April 2024 |
| CN | 112527962 | A | 19 March 2021 | None | | | |
| CN | 114399775 | A | 26 April 2022 | WO | 2023137906 | A1 | 27 July 2023 |
| CN | 115309882 | A | 08 November 2022 | None | | | |
| US | 2022392454 | A1 | 08 December 2022 | US | 11935543 | B2 | 19 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310913820